# EUROPEAN PATENT SPECIFICATION

(11) **EP 3 889 937 B1**
(45) Date of publication and mention of the grant of the patent: **18.03.2026**
(21) Application number: 19889890.0
(22) Date of filing: 30.10.2019
(51) Int. Cl.: G08B 27/00, G08B 17/00, G08B 25/08, H04M 11/04, G08B 25/00

(54) **REPORTING SYSTEM, DISASTER PREVENTION SYSTEM, REPORTING METHOD, AND PROGRAM**
MELDUNGSSYSTEM, KATASTROPHENPRÄVENTIONSSYSTEM, MELDUNGSVERFAHREN UND PROGRAMM
SYSTÈME DE NOTIFICATION, SYSTÈME DE PRÉVENTION DE CATASTROPHE, PROCÉDÉ DE NOTIFICATION, ET PROGRAMME

(30) Priority: 30.11.2018 JP 2018226056
(43) Date of publication of application: 06.10.2021
(73) Proprietor: Panasonic Intellectual Property Management Co., Ltd., Osaka-shi, Osaka 540-6207 (JP)
(72) Inventor: CHINZAKA, Mai, Osaka-shi, Osaka 540-6207 (JP); TAKAHASHI, Hideaki, Osaka-shi, Osaka 540-6207 (JP); TANAKA, Keiichi, Osaka-shi, Osaka 540-6207 (JP)
(74) Representative: Appelt, Christian W.
(86) International application number: PCT/JP2019/042446
(87) International publication number: WO 2020/110561

(56) References cited:
- JP-A- 2006 059 185
- JP-A- 2007 280 167
- JP-A- 2009 520 262
- JP-A- 2013 041 452
- US-A1- 2009 284 348
- US-A1- 2015 095 434
- US-A1- 2016 335 857

## Description

### Technical Field

The present disclosure generally relates to reporting systems, disaster prevention systems, reporting methods, and programs, and specifically, to a reporting system, a disaster prevention system, a reporting method, and a program which issue a report in response to the occurrence of an event that calls for disaster prevention measures in a facility.

### Background Art

JP 2016-118817 A describes a management system including a management device configured to perform a process relating to management of an apparatus. The management device communicates with an alarm via a communication device. Moreover, the management device is connected to a communication network outside a dwelling house.

The management system controls an electric apparatus such that when the alarm detects a fire, a ventilator and a lighting device included in the electric apparatus are turned "ON", a curtain is opened, and an alarm sound is output from a loudspeaker and an intercom of a refrigerator. Moreover, Patent Literature 1 discloses that along with these processes, the management device may issue a report outside via the communication network (output a warning about the outbreak of the fire).

US 2009/284348 A1 discloses a method for responding to incidents including receiving incident information corresponding to an incident at an incident location.

US 2016/335857 A1 discloses an apparatus that includes a piezoelectric sensor, a charge manager, a processor, and a transceiver. The piezoelectric sensor is configured to generate a first electrical signal upon detection of a vibration from a detector.

### Summary of Invention

Simply issuing the report to the outside may, however, require a user to report to a report destination such as a fire-fighting organization, for example, when the user who receives the report is in his/her travels and cannot immediately arrive at his/her house. Consequently, a counteraction may not be immediately taken against a disaster such as a fire.

In view of the foregoing, it is an object of the present disclosure to provide a reporting system, a disaster prevention system, a reporting method, and a program which lead to a more suitable countermeasure against disasters.

A reporting system, a reporting method and a program according to the present invention are defined in independent claims 1, 9 and 10. Preferred embodiments are defined in dependent claims 2 to 8.

### Brief Description of Drawings

FIG. 1 is a diagram schematically illustrating configurations of a reporting system and a disaster prevention system according to a first embodiment;
FIG. 2 is a diagram schematically illustrating an example to which the reporting system and the disaster prevention system are applied;
FIG. 3 is a sequence diagram illustrating an operation example of the reporting system and the disaster prevention system;
FIG. 4 is a conceptual view illustrating the operation example of the reporting system and the disaster prevention system;
FIG. 5 is a flowchart illustrating an example of basic operation of the reporting system and the disaster prevention system; and
FIG. 6 is a sequence diagram illustrating an operation example of a reporting system and a disaster prevention system according to a second embodiment.

### Description of Embodiments

### (First Embodiment)

### (1) Schema

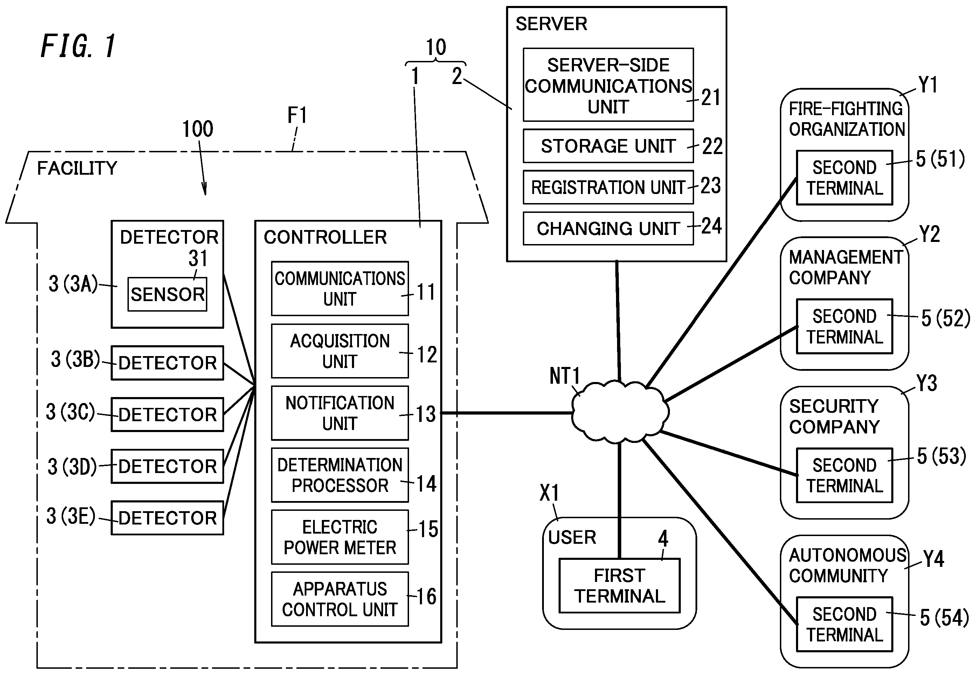

A reporting system 10 (see FIG. 1) according to the present embodiment is a system configured to issue a report in response to the occurrence of an event that calls for disaster prevention measures in a facility F1 (see FIG. 1). As used herein, the "report" means notification of information and means, for example, transmission of "report information".

Examples of the "facility" as mentioned in the present disclosure include: dwelling facilities such as detached dwelling houses, multiple residential dwelling complexes, dwelling units of multiple dwelling complexes; and non-dwelling facilities such as retail establishments, offices, schools, welfare facilities, hospitals, and factories. Examples of such non-dwelling facilities include theaters, movie theaters, public halls, amusement facilities, complex facilities, restaurants, department stores, hotels, inns, kindergartens, libraries, museums, art museums, underground shopping malls, railway stations, and airports. The examples of the "facility" as mentioned in the present disclosure further include outdoor facilities such as ballparks, gardens, parking lots, athletic grounds, and parks.

Moreover, the "disaster prevention" as mentioned in the present disclosure means overall prevention of disasters and includes not only efforts to obviate disasters but also measures to reduce damage to prevent the spread of the damage and recovery from the disasters. As used herein, the "event that calls for disaster prevention measures" means disasters which should be obviated by taking disaster prevention measures, and is a disaster such as a fire, a landslide disaster, a tornado, a typhoon, an inundation, or an earthquake. In the present embodiment, for example, the event that calls for disaster prevention measures is assumed to be a "fire", and the "disaster prevention" in this case includes, for example, fire-fighting activities as measures to reduce damage after the outbreak of the fire and activities of rescuing disaster victims.

The reporting system 10 according to the present embodiment, together with a detecting terminal adopted as a detector 3 (see FIG. 1), forms a disaster prevention system 100 (see FIG. 1). The detector 3 is a device configured to detect the presence of an event that calls for disaster prevention measures in the facility F1. In the present embodiment, the event (disaster) that calls for disaster prevention measures is a fire as described above, and therefore, the detector 3 is a fire detector configured to detect the presence of the fire in the facility F1. In particular, in the present embodiment, the detector 3 is assumed to be a dwelling house fire alarm (hereinafter referred to as a "home alarm") having a detection function of detecting the presence of a fire and a warning function of issuing a warning when the presence of the fire is detected. Such a detector 3 outputs, for example, a sound such as an alarm sound when a fire is present. In other words, the disaster prevention system 100 according to the present embodiment includes the reporting system 10 and the detecting terminals (in the present embodiment, home alarms) adopted as the detector 3.

As illustrated in FIG. 1, the reporting system 10 according to the present embodiment includes an acquisition unit 12 and a notification unit 13. The acquisition unit 12 is configured to acquire detection information from the detector 3. The detector 3 is configured to detect the presence of an event that calls for disaster prevention measures in the facility F1. The notification unit 13 is configured to transmit at least one piece of report information to the outside of the facility F1 based on the detection information. In this embodiment, the notification unit 13 is configured to transmit the at least one piece of report information to at least one of a first terminal 4 or a second terminal 5. The first terminal 4 is a terminal owned by a user X1. The second terminal 5 is a terminal owned by a person or organization that could arrive at the facility F1 ahead of the user X1.

As used herein, the "user" is a user of the facility F1 in which the reporting system 10 is introduced, and in the present embodiment, the user is a resident of the facility F1, which is a detached dwelling house. Moreover, "a person or organization" which owns the second terminal 5 is a person or organization that could arrive at the facility F1 ahead of the user X1, and examples of "a person or organization" include a fire-fighting organization Y1, a management company Y2 which manages the facility F1, a security management company Y3, and an autonomous community Y4 to which the facility F1 belongs. Moreover, the person or organization which "can arrive" at the facility F1 ahead of the user X1 as mentioned in the present disclosure mean, for example, a person or organization which can be expected to arrive at the facility F1 ahead of the user X1 also in consideration of a transportation means such as an automobile or walking. For example, a person or organization that can leave for the facility F1 by an emergency vehicle after receiving the report information and could thus arrive at the facility F1 at an earlier time point than a time point at which the user X1 who walks arrives at the facility F1 is the person or organization that "could arrive" at the facility ahead of the user X1. Alternatively, for example, in the case of the same transportation means, a person or organization whose distance to the facility F1 is shorter than the distance of the user X1 to the facility F1, that is, a person or organization which is closer to the facility F1 than the user X1 is, at a time point at which the person or organization receives report information is the person or organization that "could arrive" at the facility ahead of the user X1.

As used herein, "owned" includes a state of being simply held by a person or organization, a state of being under management by a person or organization, or other similar states. Here, "held" as mentioned in the present disclosure generally means being carried or ported and includes not only the case of being held in the hand of a person but also being attached to (being worn by) a person and being accommodated in a pocket, a bag, or the like. That is, the first terminal 4 "owned" by the user X1 is held by the user X1, is managed by the user X1, or is in any other similar state such as a state of being accommodated in a bag of the user X1. That is, the proprietary right of the first terminal 4 does not have to belong to the user X1, but the first terminal 4 may be lent to the user X1. Moreover, the second terminal 5 "owned" by the fire-fighting organization Y1 is held by the fire-fighting organization Y1, is managed by the fire-fighting organization Y1, or is in any other similar state such as a state of being installed in a dispatch room of the fire-fighting organization Y1.

In the following description, the user X1 (in the present embodiment, a resident in the facility F1) who owns the first terminal 4 is referred to as a "first report destination".
Similarly, a person or organization which owns the second terminal 5, that is, a person or organization (in the present embodiment, the fire-fighting organization Y1, the management company Y2, the security company Y3, or the autonomous community Y4) which can arrive at the facility F1 ahead of the user X1 is referred to as a "second report destination". That is, the user X1 which is the first report destination owns the first terminal 4, and an organization such as the fire-fighting organization Y1 which is the second report destination owns the second terminals 5.

According to the reporting system 10 having the configuration described above, when an event that calls for disaster prevention measures is present in the facility F1, a report is issued by transmitting, based on the detection information provided from the detector 3, the at least one piece of report information to the outside of the facility F1. At the issuance of the report, the notification unit 13 is configured to transmit the at least one piece of report information to at least one of the first terminal 4 owned by the user X1 or the second terminal 5 owned by a person or organization that could arrive at the facility F1 ahead of the user X1. That is, when an event that calls for disaster prevention measures is present in the facility F1, the reporting system 10 according to the present embodiment can issue a report not only to the user X1 but also to people or organizations (Y1 to Y5) which can be expected to rush to the facility F1 ahead of the user X1. Thus, for example, even when the user X1 who receives the report is on his/her travels and cannot immediately arrive at the facility F1, the fire-fighting organization Y1 and the like which receive the report can promptly do disaster prevention activities (e.g., fire-fighting activities) in the facility F1. This consequently provides the advantage that a delay in taking a countermeasure against a disaster such as a fire can be reduced, which leads to a more appropriate countermeasure against the disaster.

Note that the notification unit 13 is at least configured to be able to transmit the pieces of report information to both the first terminal 4 and the second terminal 5 but does not have to always transmit the pieces of report information to both the first terminal 4 and the second terminal 5. In other words, the notification unit 13 at least has both a function of transmitting a piece of report information to the first terminal 4 and a function of transmitting a piece of report information to the second terminal 5 and may transmit the piece of report information to only the first terminal 4 or only the second terminal 5.

### (2) Configuration

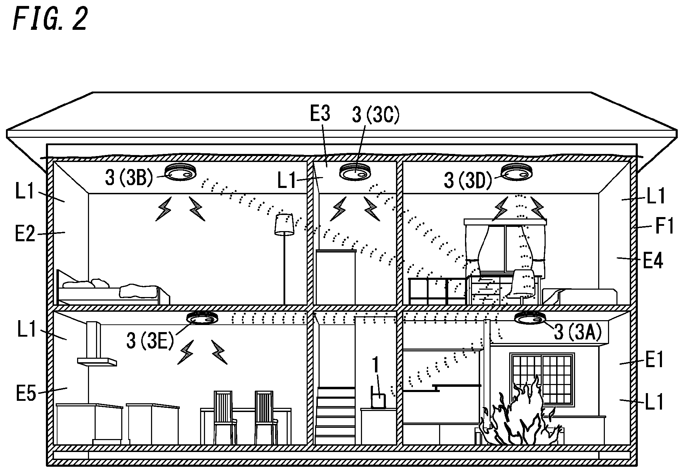

Configurations of the reporting system 10 and the disaster prevention system 100 according to the present embodiment will be described in detail below with reference to FIGS. 1 and 2.

### (2.1) Precondition

In the following description, it is assumed that three family members, namely, a father, a mother, and a child, reside in the facility F1, and as illustrated in FIG. 2, the facility F1 is a detached dwelling house including five spaces (rooms), namely spaces E1 to E5. In the example shown in FIG. 2, the space E1 is a living room, the space E2 is a bedroom, the space E3 is staircase, the space E4 is a child room, the space E5 is a kitchen.

In the present embodiment, the father, the mother, and the child who are residents in the facility F1 each can be the user X1 of the facility F1 in which the reporting system 10 is introduced (see FIG. 1). However, in the present embodiment, only the father who is a resident in the facility F1 is assumed to be the user X1. That is, the user X1 (the first report destination) who owns the first terminal 4 is the "father" among the father, the mother, and the child who are the residents in the facility F1.

In such a facility F1, the disaster prevention system 100 includes a plurality of detectors 3 installed in the respective spaces E1 to E5 which are installation locations L1. That is, the five spaces E1 to E5 are the installation locations L1 of the respective detectors 3. The plurality of detectors 3 are installed on ceilings, walls, or the like in the spaces E1 to E5 which are the installation locations L1. In the following description, the plurality of detectors 3 may be distinguished from one another by being referred to as a detector 3A, a detector 3B, a detector 3C, a detector 3D, and a detector 3E. The detectors 3A to 3E are respectively installed in the spaces E1 to E5.

At least one detector 3 of the plurality of detectors 3 is configured to communicate with a controller 1 installed in the facility F1. As used herein, "be configured to communicate" means that a signal can be directly, or indirectly via a network, a relay, or the like, transmitted and received based on an appropriate scheme of communication which is wired communication or wireless communication. That is, at least one detector 3 of the plurality of detectors 3 can transmit and receive a signal to and from the controller 1.

The controller 1 is installed, for example, beside the staircase at first-floor level in the space E3 of the facility F1. The controller 1 controls or monitors an apparatus compatible with a Home Energy Management System (HEMS) (hereinafter referred to as a HEMS-compatible apparatus). In this embodiment, examples of the HEMS-compatible apparatus include smart meters, photovoltaic generators, power storage apparatuses, fuel cells, electric cars, air conditioning devices, lighting fixtures, hot water dispensers, refrigerators, electric curtains, electric shutters, and television sets. The HEMS-compatible apparatus is not limited to these examples.

Moreover, the controller 1 is directly, or indirectly via a router or the like, connected to a network NT1 (see FIG. 1) such as the Internet. To the network NT1, a server 2 (see FIG. 1) located outside the facility F1, the first terminal 4 (see FIG. 1), the second terminals 5 (see FIG. 1), and the like are connected. The first terminal 4 and the second terminals 5 may be connected to the network NT1, for example, via a mobile phone network (a carrier network), a public wireless Local Area Network (LAN), or the like provided by a communication business operator. Examples of the mobile phone network include, for example, a third generation (3G) network and a Long Term Evolution (LTE) network. This enables the controller 1 to communicate with the server 2, the first terminal 4, the second terminals 5, and the like located outside the facility F1 via the network NT1. Moreover, the controller 1 is also configured to communicate with an information terminal (e.g., a smartphone or a tablet terminal) and the like located in the facility F1.

Moreover, in the present embodiment, a person or organization which owns the second terminal 5 includes at least one of a subject of managing the facility F1, a subject of providing security service, the autonomous community Y4 to which the facility F1 belongs, or the fire-fighting organization Y1. As mentioned herein, the "subject of managing the facility F1" is a person or organization which is a subject of management of the facility F1, and is, for example, the management company Y2, a maintenance company, or the like of the facility F1. As used herein, the "subject of providing security service" is a person or organization that provides security service relating to the facility F1, and is, for example, a security company Y3, an alarm company, or the like. As used herein, the "autonomous community" is an organization such as a city (municipality), a prefecture (prefecture), a state, or the like in which the facility F1 is located, and is, for example, a neighborhood association or a municipal government. As used herein, the "fire-fighting organization" is an organization that provides fire-fighting activities, and examples of the "fire-fighting organization" includes a fire station and a volunteer fire department. In the present embodiment, the second report destinations which owns the second terminals 5 are, for example, four destinations, namely, the fire-fighting organization Y1, the management company Y2, the security company Y3, and the autonomous community Y4.

Each of the fire-fighting organization Y1, the management company Y2, the security company Y3, and the autonomous community Y4 as the second report destinations owns the second terminal 5. In the following description, the plurality of second terminals 5 may be distinguished from one another by being referred to as a second terminal 51, a second terminal 52, a second terminal 53, and a second terminal 54. The second terminals 51 to 54 are respectively owned by the fire-fighting organization Y1, the management company Y2, the security company Y3, and the autonomous community Y4.

The second terminal 51 is, for example, an information processing device installed in a command center of the fire-fighting organization Y1. The second terminal 52 is, for example, an information processing device installed in a contact center of the management company Y2. The second terminal 53 is, for example, an information processing device installed in a command center of the security company Y3. The second terminal 54 is, for example, an information terminal (e.g., a smartphone or a tablet terminal) owned by a member of the board of the autonomous community Y4. A plurality of such second terminals 5 may be provided to each of the second report destinations.

### (2 2) Overall Structure

An overall configuration of the disaster prevention system 100 according to the present embodiment will be explained in detail below. The disaster prevention system 100 includes the reporting system 10 and the detecting terminals (in the present embodiment, the home alarms) used as the detectors 3 as described above.

Moreover, in the present embodiment, the reporting system 10 includes the controller 1 installed in the facility F1 and the server 2 installed outside the facility F1. The controller 1 and the server 2 included in the reporting system 10 will be described in detail in "(2.3) Reporting System".

As shown in FIGS. 1 and 2, the disaster prevention system 100 includes the plurality of (in the example illustrated in FIGS. 1 and 2, five) detectors 3 (the home alarms) in this embodiment. The plurality of detectors 3 are implemented as so-called "synchronous home alarms" and are configured such that no matter which of the plurality of detectors 3 detects the presence of a fire, the detector 3 emits an alarm sound in synchronization with (i.e., together with) the other detectors 3. In this embodiment, a network is established between the plurality of detectors 3 to make each detector 3 ready to communicate with the other detectors 3. Communication between the plurality of detectors 3 is realized by, for example, wireless communication using a radio wave as a medium, or wired communication. In this embodiment, for example, the detector 3A of the five detectors 3A to 3E is assumed to serve as a master device, the other detectors 3B to 3E are assumed to serve as slave devices, and communication is readily established between the master device and each of the slave devices (see FIG. 2).

Each detector 3 is configured to detect presence of an event (in this embodiment, a fire) that calls for disaster prevention measures in the facility F1. Moreover, since each detector 3 in the present embodiment is the house alarm system as described above, each detector 3 has a detection function of detecting the presence of a fire and a warning function of issuing a warning when the presence of the fire is detected.

Here, each detector 3 includes a sensor 31 configured to output an electric signal according to a physical quantity. In FIG. 1, the sensor 31 of only the detector 3A of the five detectors 3A to 3E is shown, but the other detectors 3B to 3E each have a sensor 31 in a similar manner to the detector 3A. The sensor 31 is a sensor for implementing the detection function of the detector 3. That is, in the present embodiment, the detector 3 detects the presence of a "fire" as an event that calls for disaster prevention measures, and therefore, the sensor 31 is a sensor for detecting the presence of the fire. The sensor 31 is, for example, a photoelectric sensor for detecting smoke and includes a light-emitting element and a light-receiving element. In such a sensor 31, for example, light scattered by smoke flowing between the light-emitting element and the light-receiving element is received by the light-receiving element. The sensor 31 outputs, for example, an electric signal according to the quantity of light received by the light-receiving element, that is, an electric signal according to the concentration (the physical quantity) of smoke flowing into the detector 3. However, the sensor 31 is not limited to the photoelectric sensor but may be, for example, a sensor for detecting heat, a flame, or the like resulting from a fire.

The warning function of issuing a warning when the presence of a fire is detected is implemented by at least one of, for example, a sound (an alarm sound or the like) or light. That is, when the detector 3 detects the presence of an event (in the present embodiment, a fire) that calls for disaster prevention measures, the detector 3 issues a warning (alert) to a person in the facility F1 by at least one of a sound or light.

In this embodiment, no matter which of the detector 3A, which serves as a master device, or any of the detectors 3B to 3E, which serve as slave devices detects a fire, the detector 3 issues a warning in synchronization with the other detectors 3 (together with the other detectors 3).

Specifically, when a fire is present in the space E1 which is the living room as shown in the example in FIG. 2, the detector 3A installed in the space E1 detects the presence of the fire. As described above, when the detector 3A, which is the master device, detects the presence of the fire, the detector 3A issues an alert as an alarm sound or the like while transmitting detection information to the other four detectors 3B to 3E. Each of the detectors 3B to 3E which receive the detection information issues an alert in synchronization with the issuance of the alert by the detector 3A.

In contrast, when the detector 3B, which is the slave device, detects the presence of a fire, the detector 3B issues an alert as an alarm sound or the like while transmitting detection information to the detector 3A, which is the master device. The detector 3A which receives the detection information issues an alert in synchronization with the issuance of the alert by the detector 3B while transmitting the detection information to the detectors 3C to 3E which are slave devices other than the detector 3B. Each of the detectors 3C to 3E that receives the detection information issues an alert in synchronization with the issuance of the alert by the detector 3B. Consequently, the other detectors 3A, 3C to 3E issue alerts in synchronization with the issuance of the alert by the detector 3B. Also when any of the detectors 3C to 3E, which are the slave devices, detects the presence of a fire, the detector issues an alert in synchronization with the other detectors 3 in a similar manner to the case where the detector 3B detects the presence of the fire.

In the present embodiment, each detector 3 may be implemented as a battery-driven home alarm, for example. However, this is only an example of the present disclosure and should not be construed as limiting. Alternatively, each detector 3 may also be electrically connected to an external power supply (such as a commercial power supply) and may be operated by converting AC power (having an effective value of 100 V, for example) supplied from the external power supply into DC power.

At least one detector 3 of the plurality of detectors 3 is configured to communicate with the controller 1 of the reporting system 10 as described above. In the present embodiment, the detector 3A of the plurality of detectors 3, which serves as the master device, directly communicates with the controller 1. In contrast, the detectors 3B to 3E of the plurality of detectors 3, which serve as slave devices, indirectly communicate with the controller 1 via the detector 3A serving as the master device. Thus, each of the plurality of detector 3 directly or indirectly communicates with the controller 1. FIG. 1 shows as if all of the plurality of detectors 3 are directly connected to the controller 1, but actually, the detectors 3B to 3E communicate with the controller 1 via the detector 3A as described above.

This enables the reporting system 10 (the controller 1) to receive the detection information from the detector 3 and to operate in synchronization with the detector 3. In the present embodiment, when any of the plurality of detectors 3 detects the presence of a fire, the detector 3A transmits the detection information to the controller 1, thereby realizing synchronized operation of the reporting system 10 and the detector 3. The synchronized operation of the detectors 3 and the reporting system 10 will be described in "(2.3) Configuration of Reporting System".

By the way, in this embodiment, the detectors 3 hold, as shown in FIG. 1, at least respective pieces of location information relating to the installation locations L1 (see FIG. 2) where the detectors 3 are installed. As used herein, the "location information" is information for identifying the installation location L1 of the detector 3 and includes at least one of information representing the location of the facility F1 or information representing the installation location L1 of the detector 3 in the facility F1. The information representing the location of the facility F1 includes, for example, the address of the facility F1 or coordinate information, according to, for example, a Global Positioning System (GPS), representing the location of the facility F1. The pieces of information representing the installation locations L1 of the detectors 3 in the facility F1 include, for example, pieces of information such as the names, floor numbers (e.g., a first floor or a second floor), pathways from an entrance (e.g., "to the right when viewed from the entrance") of the rooms (the spaces E1 to E5) in which the detectors 3 are installed. The names of the rooms (the spaces E1 to E5) may be pieces of name information (e.g., "living room", "staircase", "bedroom", "child room", and "kitchen") or pieces of code information (e.g., "A1", "A2", "A3", "A4", and "A5"). Alternatively, each of the pieces of name information may correspond to, for example, a simple name such as "bedroom" or a detailed name such as "parents' bedroom" or "second-floor bedroom".

The pieces of code information are associated with the respective pieces of name information based on pieces of association information stored in, for example, the server 2 (see FIG. 1). In a similar manner, the simple names are associated with, for example, the detailed names based on the pieces of association information stored in the server 2. Thus, when the pieces of information representing the installation locations L1 of the detectors 3 in the facility F1 include the pieces of code information (or the simple names), changing the pieces of association information stored in the server 2 enables the pieces of name information (or the detailed names) to be changed. Thus, the information (the name information) representing the installation location L1 of the detector 3 identified based on the location information can be arbitrarily set (registered) from inside or outside of the facility F1 via an information terminal (e.g., a smartphone or a tablet terminal) which can access the server 2.

In this embodiment, each detector 3 includes a memory configured to store its location information as data. Specifically, each detector 3 stores its location information in memory such as a read-only memory (ROM), a random-access memory (RAM), an electrically erasable programmable read-only memory (EEPROM), and other storage devices. Note that each detector 3 is not limited to the configuration in which the location information is stored in the memory but may hold the location information by turning ON and OFF the contact of a dip switch or a rotary switch, for example.

The detection information transmitted from at least from the detector 3 (3A) to the controller 1 includes the location information of the detector 3 which is a generation source of the detection information, which will be described in detail in "(2.3) Configuration of Reporting System". Moreover, in the present embodiment, the detection information transmitted from at least any of the detectors 3B to 3E, which are slave devices, to the detector 3A, which is the master device, includes location information.

### (2.3) Configuration of Reporting System

Next, the configuration of the reporting system 10 according to the present embodiment will be described in detail. The reporting system 10 includes the controller 1 and the server 2 as described above.

As illustrated in FIG. 1, the controller 1 includes a communications unit 11, the acquisition unit 12, the notification unit 13, a determination processor 14, an electric power meter 15, and an apparatus control unit 16. In the present embodiment, for example, the controller 1 includes a computer system as a main component, and the computer system includes one or more processors and one or more memories. The one or more processors execute programs stored in the one or more memories, thereby implementing functions of the acquisition unit 12, the notification unit 13, the determination processor 14, the electric power meter 15, the apparatus control unit 16, and the like. The programs may be stored in the one or more memories in advance, may be provided by a non-transitory recording medium such as a memory card storing the programs, or may be provided via a telecommunications network. In other words, the programs are programs for causing the computer system to function as the controller 1.

The controller 1 controls or monitors the HEMS-compatible apparatus in the facility F1 as described above. Moreover, the controller 1 further has a function of measuring electric power used in the facility F1, electric power generated in the facility F1, and the like in synchronization with a measurement system provided to a distribution board or the like. In particular, in the present embodiment, the controller 1 is configured to measure not only consumed (or generated) electric power in the entirety of the facility F1 but also power consumption and the like by each of the plurality of branch circuits.

The communications unit 11 has a function of communicating with the detectors 3, the HEMS-compatible apparatus, the measurement system, and the like. Moreover, the controller 1 is configured to communicate also with the server 2, the first terminal 4, and the second terminals 5 via the network NT1, and therefore, the communications unit 11 further has a function of communicating with these devices. That is, the communications unit 11 has the function of communicating with the server 2, the first terminal 4, and the second terminals 5 located outside the facility F1. In the present embodiment, bidirectional communication is possible among the communications unit 11 (the controller 1) and each of the detectors 3, the HEMS-compatible apparatus, the measurement system, and the like. Similarly, bidirectional communication is possible among the communications unit 11 (the controller 1) and each of the server 2, the first terminal 4, the second terminals 5, and the like.

The communication scheme among the communications unit 11 (the controller 1) and each of the detectors 3, the HEMS-compatible apparatus, the measurement system, and the like is, for example, wireless communication using a radio wave as a medium. Examples of the wireless communication include a communication scheme compliant with a communication standard such as a 920-MHz-band specified small power radio station (wireless station requiring no license), Wi-Fi (registered trademark), and Bluetooth (registered trademark). Moreover, the communication protocol in the communication among the communications unit 11 (the controller 1) and each of the detectors 3, the HEMS-compatible apparatus, the measurement system, and the like is, for example, Ethernet (registered trademark), ECHONET Lite (registered trademark), or the like.

The acquisition unit 12 is configured to acquire detection information from the detector 3. That is, the acquisition unit 12 has a function of acquiring the detection information from the detector 3 installed in the same facility F1 as the controller 1. The detection information is transmitted from the detector 3 to the controller 1 (the communications unit 11) when the detector 3 detects the presence of an event (in the present embodiment, a fire) that calls for disaster prevention measures. In the present embodiment, the acquisition unit 12 acquires the detection information directly from the detector 3A, which is the master device, or indirectly via the detector 3A from any of the detectors 3B to 3E, which are slave devices.

In this embodiment, the detection information which the acquisition unit 12 acquires from the detector 3 includes location information of the detector 3 which is a generation source of the detection information. The location information included in the detection information is information relating to the installation location L1 of the detector 3 which is the generation sources of the detection information, and the location information is, for example, the name information (the simple name) such as "bedroom".

The notification unit 13 is configured to transmit at least one piece of report information to the outside of the facility F1 based on the detection information. In this embodiment, the notification unit 13 is configured to transmit the at least one piece of report information to at least one of a first terminal 4 or a second terminal 5. The first terminal 4 is a terminal owned by a user X1. The second terminal 5 is a terminal owned by a person or organization that could arrive at the facility F1 ahead of the user X1.

That is, when the acquisition unit 12 acquires the detection information, the notification unit 13 transmits the at least one piece of report information based on the detection information. In the present embodiment, the notification unit 13 transmits the pieces of report information from the communications unit 11 via the network NT1 to the first terminal 4 and the second terminal 5.

As used herein, the "report information" is information which is transmitted, when the detector 3 detects the presence of an event (in the present embodiment, a fire) that calls for disaster prevention measures, from the controller 1 (the communications unit 11) to the outside of the facility F1 so as to issue a report. In particular, transmitting the report information to the first terminal 4 owned by the user X1, who is the first report destination, can, for example, inform the user X1 who is out of the facility F1 of the presence of an event (in the present embodiment, a fire) that calls for disaster prevention measures. Moreover, transmitting the report information to each of the second terminals 5 owned by the fire-fighting organization Y1 and the like, which are the second report destinations, can demand the fire-fighting organization Y1 and the like to do disaster prevention activities (e.g., fire-fighting activities) in the facility F1.

In this embodiment, the notification unit 13 includes the location information of the detector 3 which is the generation source of the detection information in a piece of report information of the pieces of report information which is to be transmitted to at least each of the second terminals 5. In other words, of the pieces of report information transmitted from the notification unit 13, the piece of report information to be transmitted to each of the second terminals 5 includes the location information of the detector 3 which is the generation source of the detection information. The location information is information for identifying the installation location L1 of the detector 3 as described above. In this embodiment, the notification unit 13 is assumed to include the location information of the detector 3 which is the generation source of the detection information into not only the report information to be transmitted to each of the second terminals 5 but also the report information to be transmitted to the first terminal 4.

Moreover, the notification unit 13 includes time information representing a time at which the detection information is generated in the report information to be transmitted to each of the second terminals 5. In other words, of the pieces of report information transmitted from the notification unit 13, the piece of report information to be transmitted to at least each of the second terminals 5 includes the time information representing the time at which the detection information is generated. In the present embodiment, for example, the time information is generated by the controller 1. That is, the notification unit 13 regards a time at which the acquisition unit 12 acquires the detection information as the time at which the detection information is generated, and the notification unit 13 transmits the pieces of report information provided with the time information representing the time. In this embodiment, the notification unit 13 is assumed to include the time information representing the time at which the detection information is generated into not only the report information to be transmitted to each of the second terminals 5 but also the report information to be transmitted to the first terminal 4.

The determination processor 14 determines at least one of whether or not to allow the notification unit 13 to transmit at least one piece of report information or an aspect of transmission of the at least one piece of report information from the notification unit 13. That is, at least one of whether or not to allow the notification unit 13 to transmit the at least one piece of report information or the aspect of transmission of the at least one piece of report information from the notification unit 13 is determined by the determination processor 14. As used herein, the "aspect of transmission of the at least one piece of report information" includes, for example, the order of transmission of the pieces of report information, a stand-by time before the transmission of the at least one piece of report information, the contents of the at least one piece of report information, and the transmission destination(s) (e.g., the first terminal 4, the second terminals 5, or the first terminal 4 and the second terminals 5) of the at least one piece of report information. In sum, as described above, the notification unit 13 is at least configured to be able to transmit the pieces of report information to both the first terminal 4 and the second terminal 5 but does not have to always transmit the pieces of report information to both the first terminal 4 and the second terminal 5. When the determination processor 14 determines that the aspect of transmission of the at least one piece of report information is an aspect of transmitting the report information to only the first terminal 4, the notification unit 13 transmits the report information to only the first terminal 4.

In this embodiment, the determination processor 14 determines the at least one based on determining information relating to at least one of the situation of the facility F1 or the situation of a person present in the facility F1. As used herein, the "determining information" is information relating to at least one of the situation of the facility F1 or the situation of a person present in the facility F1 and can be identified based on, for example, the presence or absence of a person in the facility F1, a situation of electric power consumption of the facility F1, a time zone, and the pattern of life of the person present in the facility F1.

The presence or absence of a person directly represents the situation of the facility F1, for example, whether a person is present or absent in the facility F1. The presence or absence of a person can be presumed also from the situation of electric power consumption of the facility F1, the time zone, the pattern of life of the person present in the facility F1, and the like. The situation of electric power consumption of the facility F1, the time zone, the pattern of life of the person present in the facility F1, and the like are also used to presume a situation of the person present in the facility F1, such as whether or not the person in the facility F1 is sleeping, and whether or not the person in the facility F1 is taking a bath. Moreover, for example, a situation in which a person present in the facility F1 is only a child can be presumed based on the situation of electric power consumption of the facility F1, the time zone, the pattern of life of the person present in the facility F1, and the like. The determination processor 14 checks the pieces of determination information with determination conditions to determine at least one of whether or not to allow the notification unit 13 to transmit the at least one piece of report information or the aspect of transmission of the at least one piece of report information from the notification unit 13. In the present embodiment, only the determining information relating to the presence or absence of a person in the facility F1 is assumed to be used for the determination by the determination processor 14, which will be described in detail in "(3) Operation".

The electric power meter 15 executes a basic process as the controller 1. In this embodiment, the electric power meter 15 has a function of measuring consumed (or generated) electric power by the entirety of the facility F1 and each of the plurality of branch circuits in the facility F1.

The apparatus control unit 16 executes a basic process of the controller 1. In this embodiment, the apparatus control unit 16 has a function of controlling or monitoring the HEMS-compatible apparatus installed in the facility F1.

As illustrated in FIG. 1, the server 2 includes a server-side communications unit 21, a storage unit 22, a registration unit 23, and a changing unit 24. In the present embodiment, for example, the server 2 includes a computer system as a main component, and the computer system includes one or more processors and one or more memories. The one or more processors execute programs stored in the one or more memories to implement functions as the storage unit 22, the registration unit 23, the changing unit 24, and the like. The programs may be stored in the one or more memories in advance, may be provided by a non-transitory recording medium such as a memory card storing the programs, or may be provided via a telecommunications network. In other words, the programs are programs for causing the computer to function as the server 2. The server 2 is managed by, for example, a person or organization other than the second report destinations (Y1 to Y5).

The server-side communications unit 21 is connected to the network NT1 and has a function of communicating with at least the controller 1. Moreover, the server 2 is configured to communicate also with the first terminal 4 and the second terminals 5 via the network NT1, and therefore, the server-side communications unit 21 further has a function of communicating with these terminals. In the present embodiment, the controller 1 basically transmits the pieces of report information via the server 2 to the first terminal 4 and the second terminals 5. That is, the controller 1 transmits the pieces of report information to the server 2, and the server 2 transmits (transfers) the pieces of report information to the first terminal 4 and the second terminals 5, and consequently, the pieces of report information are transmitted from the controller 1 to the first terminal 4 and the second terminals 5.

The storage unit 22 stores pieces of information on at least the first terminal 4 and the second terminals 5. As used herein, the pieces of information on the first terminal 4 and the second terminals 5 are identifiers for identifying the first terminal 4 and the second terminals 5, and are, for example, electronic mail addresses, telephone numbers, and IP addresses. In the present embodiment, the storage unit 22 stores the pieces of information on the first terminal 4 and the second terminals 5 in association with the pieces of information (the identifier, the address, and the like of the controller 1) on the facility F1. For example, the information on the first terminal 4 owned by the user X1 is stored in association with the facility F1 in which the user X1 resides.

Moreover, the storage unit 22 also stores, for example, association information in which the pieces of code information are associated with the pieces of name information as described above. Moreover, the storage unit 22 also stores, for example, association information in which the simple names are associated with the detailed names as described above. The storage unit 22 includes a rewritable nonvolatile memory such as Electrically Erasable Programmable Read-Only Memory (EEPROM).

The registration unit 23 registers the pieces of information on the first terminal 4 and the second terminals 5. The registration unit 23 newly writes information in the storage unit 22 or rewrites information stored in the storage unit 22 based on an operation signal from an information terminal (a smartphone, a tablet terminal, or the like), thereby registering, for example, the pieces of information on the first terminal 4 and the second terminals 5. For example, by using an information terminal which can access the server 2, the pieces of information on the first terminal 4 and the second terminals 5 can be arbitrarily set (registered) from the interior or the outside of the facility F1.

The changing unit 24 changes at least some of pieces of information transmitted as the pieces of report information from the notification unit 13. In the present embodiment, for example, the changing unit 24 changes the location information of the pieces of information transmitted as the pieces of report information. Specifically, when the location information of the detection information includes a simple name such as "bedroom", the changing unit 24 changes the location information to a detailed name such as "parents' bedroom", "second-floor bedroom", or the like. Thus, the pieces of report information transmitted from the server 2 include the detailed name as the location information. Moreover, when the location information of the detection information includes a code information such as "A1", the changing unit 24 may change the location information to a name information such as "bedroom".

### (3) Operation

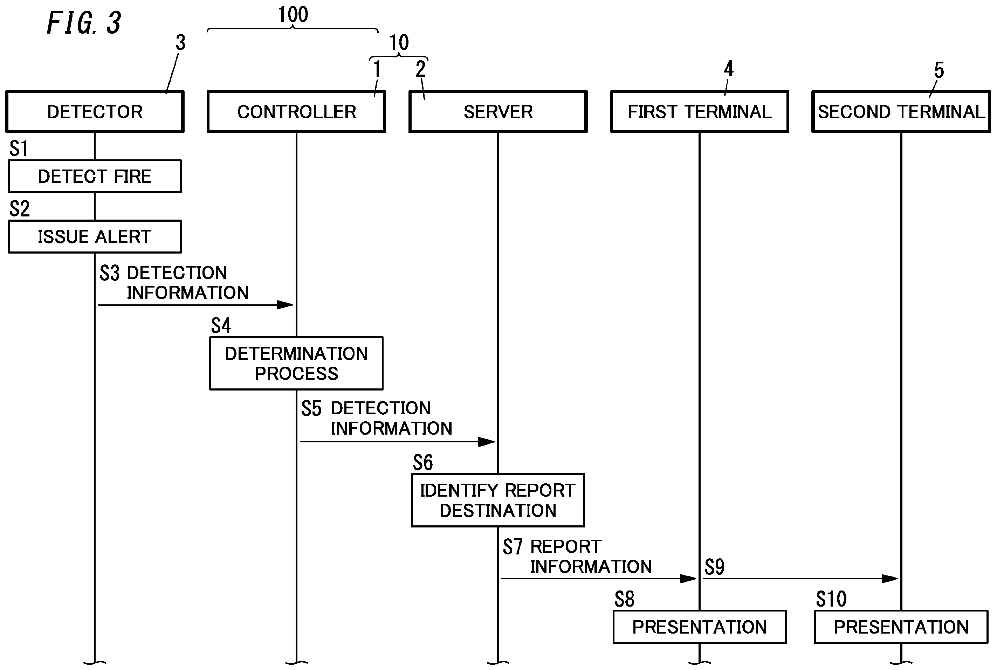

Next, operation of the reporting system 10 and the disaster prevention system 100 according to the present embodiment will be described in detail with reference to FIGS. 3 to 5. The operation of the reporting system 10 corresponds to a reporting method of the present embodiment.

### (3.1) Operation Example

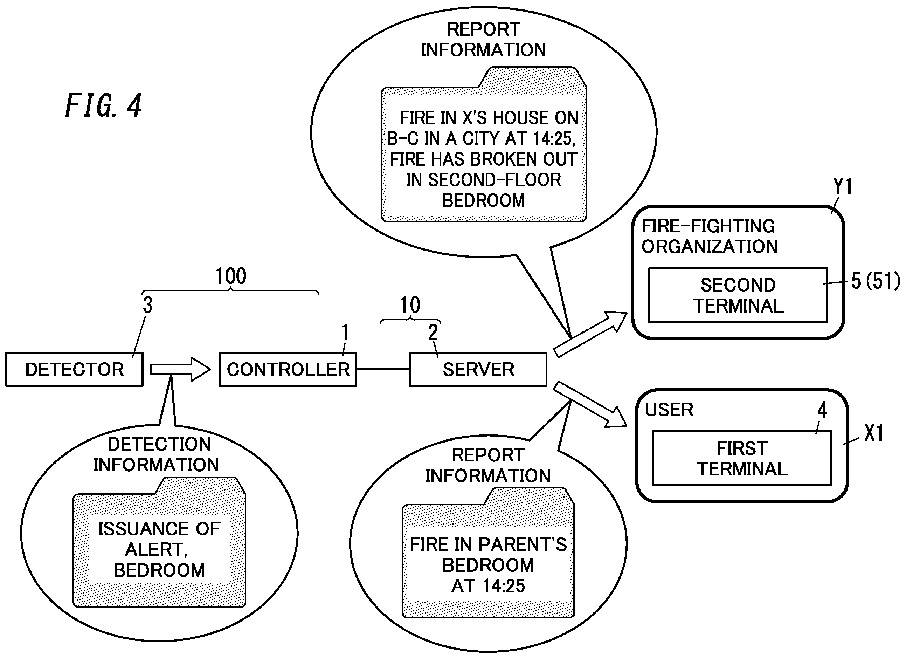

FIGS. 3 and 4 show an operation example of the reporting system 10 and the disaster prevention system 100 when a fire is present in the facility F1. In this embodiment, it is assumed that the fire is present in the space E2 (bedroom) in the facility F1 in an "absent" state where no person is present in the facility F1. It is assumed that detailed names, namely, "parents' bedroom" and "second-floor bedroom" are registered as the pieces of name information on the space E2 (bedroom) in the server 2.

In this case, as illustrated in FIG. 3, any of the detectors 3 installed in the facility F1 at first detects the fire (S1) and issues an alert as an alarm sound or the like (S2). Then, the detector 3 directly or indirectly transmits detection information to the controller 1 (S3). In this embodiment, the detection information transmitted from the detector 3 to the controller 1 includes pieces of information which are at least "Issuance of alert, bedroom" as illustrated in FIG. 4. Of the pieces of information, the information "bedroom" is the location information representing the installation location L1 of the detector 3 in the facility F1 of pieces of location information of the detector 3 which is the generation source of the detection information.

The controller 1 which has received the detection information executes the determining process by the determination processor 14 as illustrated in FIG. 3 (S4). In the present embodiment, the determining process by the determination processor 14 is based on the determining information relating to the presence or absence of a person in the facility F1. The presence or absence of a person can be determined based on, for example, an output of a motion sensor. Alternatively, the determining information relating to the presence or absence of a person may be presumed based on the situation of electric power consumption of the facility F1, the time zone, the pattern of life of the person present in the facility F1, and the like.

Then, the controller 1 transmits the detection information to the server 2 (S5). At this time, the controller 1 transmits a result (determination result) of the determining process by the determination processor 14, together with the detection information, to the server 2. Moreover, the detection information transmitted from the controller 1 includes information representing the type of the detector 3 (in the present embodiment, the home alarm for detecting a "fire") which is the generation source of the detection information. Moreover, the detection information transmitted from the controller 1 includes time information representing a time at which the detection information is generated (a time at which the acquisition unit 12 acquires the detection information).

The server 2 which has received the detection information identifies one or more report destinations of respectively one or more pieces of report information (S6). At this time, the server 2 reads, from the storage unit 22, the pieces of information on the first terminal 4 and the second terminals 5 corresponding to the facility F1 provided with the controller 1 which is a transmission source of the detection information. Moreover, the server 2 refers to the determination result by the determination processor 14 to identify (determine) the one or more report destinations. In this embodiment, for example, if the determination result is "presence" representing that a person is present in the facility F1, the server 2 determines only the first terminal 4 as the report destination. If the determination result is "absence" representing that no person is present in the facility F1, the server 2 determines both the first terminal 4 and the second terminals 5 as the report destinations. That is, the determining condition in the present embodiment includes a condition that the report information is transmitted to only the first terminal 4 when a person is present in the facility F1, and the pieces of report information are transmitted to both the first terminal 4 and the second terminals 5 when a person is not present in the facility F1. In the example in FIGS. 3 and 4, the determination result is "absence", and therefore, both the first terminal 4 and the second terminals 5 are the report destinations.

As illustrated in FIG. 4, the report information transmitted from the server 2 to the first terminal 4 includes pieces of information which are at least "Fire in parents' bedroom at 14:25". Of these pieces of information, information "parents' bedroom" is information which can be obtained by changing the simple name "bedroom" by the changing unit 24. Moreover, the information "14:25" is time information included in the detection information transmitted from the controller 1 and represents a time at which the detection information is generated.

As illustrated in FIG. 4, the pieces of report information transmitted from the server 2 to the second terminals 5 include pieces of information which are at least "Fire in X's house on B-C in A City, at 14:25. Fire has broken out in second-floor bedroom". Of these pieces of information, information "X's house on B-C in A City" is the location information including information representing the location of the facility F1 (the address of the facility F1 and the like). That is, in the present embodiment, the pieces of report information transmitted from the server 2 are provided with the location information including the information representing the location of the facility F1 (the address of the facility F1 and the like). That is to say, the storage unit 22 of the server 2 stores the pieces of information (the address and the like) of the facility F1, and therefore, the server 2 generates the pieces of report information inclusively of information such as the address and the like as the location information representing the location of the facility F1. Moreover, the information "second-floor bedroom" is information which can be obtained by changing the simple name "bedroom" by the changing unit 24. Moreover, the information "14:25" is time information included in the detection information transmitted from the controller 1 and represents a time at which the detection information is generated.

As illustrated in FIG. 3, when the server 2 transmits the report information to the first terminal 4 (S7), the first terminal 4 presents the report information thus received (S8). The first terminal 4 displays the contents of the report information in text, for example, on a display of the first terminal 4, thereby presenting the report information. Likewise, when the server 2 transmits the pieces of report information to the second terminals 5 (S9), the second terminals 5 present the pieces of report information thus received (S10). The second terminals 5 display the contents of the pieces of report information in text, for example, on displays of the second terminals 5, thereby presenting the pieces of report information. In this embodiment, the first terminal 4 and the second terminals 5 preferably present the pieces of report information by push notification when receiving the pieces of report information.

As described above, the reporting system 10 issues a report not only to the user X1, who owns the first terminal 4 and who is the first report destination, but also to the fire-fighting organization Y1, the management company Y2, the security company Y3, the autonomous community Y4, and the like which own the second terminals 5 and which are the second report destinations. That is, when an event that calls for disaster prevention measures occurs in the facility F1, the reporting system 10 issues a report not only to the user X1 but also to people or organizations (Y1 to Y5) which can be expected to rush to the facility F1 ahead of the user X1. Thus, for example, even when the user X1 who receives the report is on his/her travels and cannot immediately arrive at the facility F1, the fire-fighting organization Y1 and the like which receive the report can promptly do disaster prevention activities (e.g., fire-fighting activities) in the facility F1. Consequently, this can reduce a delay in taking a countermeasure against a disaster such as a fire, which leads to a more appropriate countermeasure against the disaster.

### (3.2) Flowchart

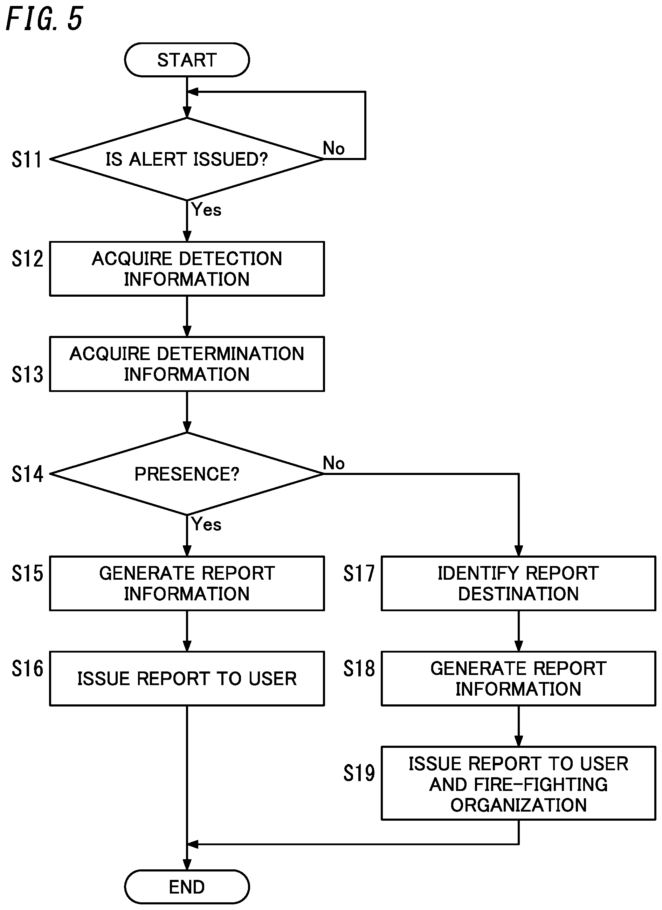

FIG. 5 is a flowchart illustrating an example of the basic operation of the reporting system 10 and the disaster prevention system 100 according to the present embodiment. That is, the flowchart illustrated in FIG. 5 represents evacuation assistance method implemented by the reporting system 10.

As illustrated in FIG. 5, the disaster prevention system 100 at first monitors whether or not an alert is issued from the detector 3 (S11). If no alert is issued, that is, the presence of a fire is not detected (S11: No), the disaster prevention system 100 continues monitoring whether or not an alert is issued from the detector 3. In contrast, if an alert is issued, that is, if the presence of a fire is detected (S11: Yes), the reporting system 10 acquires the detection information from the detector 3 by the acquisition unit 12 (S12).

Thereafter, the reporting system 10 acquires the determining information by the determination processor 14 (S13). Since the present embodiment adopts the determining information relating to the presence or absence of a person in the facility F1 as described above, the determination processor 14 acquires the determining information relating to the presence or absence of the person in the facility F1. The reporting system 10 performs the determining process by the determination processor 14 (S14). At this time, the determination processor 14 determines the presence or absence of a person, for example, based on an output from the motion sensor, the situation of electric power consumption of the facility F1, the time zone, the pattern of life of the person present in the facility F1, and the like.

If it is determined that a person is present in the facility F1, that is, if "presence" is determined (S14: Yes), the reporting system 10 generates report information by the server 2 (S15), and the server 2 transmits the report information to the first terminal 4, thereby issuing a report to the user X1 (S16). The report information generated at this time and transmitted to the first terminal 4 is report information addressed to the first terminal 4 as illustrated in for example, FIG. 4.

In contrast, if it is determined that a person is not present in the facility F1, that is, if "absence" is determined (S14: No), the reporting system 10 identifies report destinations by the server 2 (S17). At this time, in addition to the first report destination (the user X1), the second report destinations (the fire-fighting organization Y1, the management company Y2, the security company Y3, and the autonomous community Y4) are also identified as the report destinations. Then, the reporting system 10 generates pieces of report information by the server 2 (S18), and the server 2 transmits the pieces of report information to the first terminal 4 and the second terminals 5, thereby issuing a report to the user X1 and the fire-fighting organization Y1 and the like (S19). The report information generated at this time and transmitted to the first terminal 4 is report information addressed to the first terminal 4 as illustrated in for example, FIG. 4. Likewise, the pieces of report information transmitted to the second terminals 5 are pieces of report information addressed to the second terminals 5 as illustrated in for example, FIG. 4.

Hereafter, the reporting system 10 repeatedly executes a series of processes S11 to S19. The flowchart in FIG. 5 is merely an example of the operation of the reporting system 10, and the processes may accordingly be omitted, or processes may be added, or the order of the processes may accordingly be changed.

### (4) Variation

The first embodiment is one of the various embodiments of the present disclosure. The drawings to be referred to in the present disclosure are all schematic representations. That is to say, the ratio of the dimensions (including thicknesses) of respective constituent elements illustrated on the drawings does not always reflect their actual dimensional ratio. Moreover, functions similar to the reporting system 10 according to the first embodiment may be implemented by a reporting method, a computer program, a non-transitory storage medium storing a computer program, or the like. A reporting method according to one aspect includes an acquisition process (corresponding to "S12" in FIG. 5) and a notification process (corresponding to "S16" and "S19" in FIG. 5). The acquisition process is a process of acquiring detection information from the detector 3. The detector 3 is configured to detect the presence of an event that calls for disaster prevention measures in the facility F1. The notification process is a process of transmitting at least one piece of report information to the outside of the facility F1 based on the detection information. In the notification process, the at least one piece of report information is transmitted to both the first terminal 4 and the second terminals 5. The first terminal 4 is owned by the user X1. The second terminals 5 are terminals other than the first terminal 4. The second terminals 5 are owned by people or organizations that could arrive at the facility F1 ahead of the user X1. A (computer) program according to one aspect of the present disclosure is a program configured to cause one or more processors to execute the reporting method.

Variations of the first embodiment will be described below. The variations described below are applicable accordingly in combination.

The reporting system 10 in the present disclosure includes a computer system in its controller 1, for example. The computer system includes, as principal hardware components, a processor and a memory. The functions of the reporting system 10 according to the present disclosure may be implemented by making the processor execute a program stored in the memory of the computer system. The program may be stored in the memory of the computer system in advance, may be provided via telecommunications network, or may be provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). A field-programmable gate array (FPGA), which is programmable after fabrication of the LSI, or a logical device which allows reconfiguration of connections in LSI or reconfiguration of circuit cells in LSI may be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

Moreover, collecting at least some of the functions of the reporting system 10 in a single housing is not an essential configuration of the reporting system 10. The components of the reporting system 10 may be distributed in a plurality of housings. For example, some of the functions provided to the controller 1 of the reporting system 10 may be provided to a housing other than the controller 1. Still alternatively, at least some functions of the reporting system 10 (e.g., some functions of the determination processor 14) may be implemented as a cloud computing system as well.

In contrast, in the first embodiment, at least some functions of the reporting system 10 distributed in a plurality of devices may be collected in one housing. For example, functions distributed in the controller 1 and the server 2 may be collected in one housing.

Moreover, the event that calls for disaster prevention measures is not limited to the fire but may be a disaster such as a landslide disaster, a tornado, a typhoon, an inundation, or an earthquake. In this case, the detector 3 that detects the presence of an event that calls for disaster prevention measures is realized by, for example, a moisture sensor (water level sensor), an earthquake sensor (vibration sensor), or the like. Alternatively, the event that calls for disaster prevention measures may also be leakage of a gas or the presence of carbon monoxide (CO) due to incomplete combustion, for example. In this case, the detector 3 is realized by a gas sensor, a CO sensor, or the like.

Moreover, the communication scheme between the controller 1 (the communications unit 11) and each of the detector 3, the HEMS-compatible apparatus, the measurement system, and the like is not limited to wireless communication but may be a wired communication compliant with a communication standard such as wired Local Area Network (LAN).

Moreover, the controller 1 may include a user interface such as a display unit and an operating unit.

The first terminal 4 or the second terminals 5 may present information by an aspect other than display, for example, by a sound (including voice, an alarm sound, and the like), outputting light (including flashing light), vibration, printing, and the like.

Moreover, the user X1 which is the first report destination of the reporting system 10 is not limited to a "father" but may be a mother or a child who is a resident in the facility F1. Here, the user X1 is not limited to one person but may be a plurality of people, and, for example, each of the father and the mother may be the user X1 which is the first report destination. In this case, the reporting system 10 transmits pieces of report information to the plurality of first terminals 4 owned by the respective uses X1.

Moreover, the user X1 is at least a user of the facility F1 and is not limited to a resident in the facility F1 (detached dwelling house). That is, the user X1 which is the first report destination of the reporting system 10 may be a relative or the like of a resident in the facility F1. Moreover, when the facility F1 is a non-dwelling facility, the user X1 which is the first report destination may be a user, a tenant, a worker, or the like of the facility F1.

Moreover, the second report destinations which own the second terminals 5 are people or organizations which can arrive at the facility F1 ahead of the user X1, and are not limited to the fire-fighting organization Y1, the management company Y2 which manages the facility F1, the security management company Y3, the autonomous community Y4 to which the facility F1 belongs, and the like. For example, a neighbor of the facility F1, a relative or the like of the user X1 who lives near the facility F1, or the like may be the second report destination. When the facility F1 is a non-dwelling facility, the second report destination may be, for example, a customer who uses the facility F1 (e.g., in the case of the facility F1 being a retail establishment, a customer who shops), a tenant in a facility near the facility F1, or a worker in a facility near the facility F1.

Moreover, the determination processor 14 determines at least one of whether or not to allow the notification unit 13 to transmit at least one piece of report information or the aspect of transmission of the at least one piece of report information from the notification unit 13, and for example, the determination processor 14 may determine only whether or not to allow the notification unit 13 to transmit the at least one piece of report information. For example, the determination processor 14 may be configured such that when the determination result is "presence", the at least one piece of report information is not transmitted from the notification unit 13 and when the determination section is "absence", the pieces of report information are transmitted from the notification unit 13.

Moreover, the report information transmitted to the first terminal 4 and the report information transmitted to the second terminal 5 may have the same contents. Alternatively, when there are a plurality of second report destinations (second terminals 5), the contents of the pieces of report information to be transmitted may be different between the second report destinations, that is, the second terminals 5. Similarly, when there are a plurality of first report destinations (first terminals 4), the contents of the report information to be transmitted may be different between the first report destinations, that is, the first terminals 4.

Moreover, each detector 3 at least has a function of detecting the presence of an event that calls for disaster prevention measures in the facility F1 and is not limited to the configuration including the sensor 31 for outputting an electric signal according to a physical quantity. For example, when the event which is the target of the disaster prevention is a natural disaster such as a landslide disaster, a tornado, a typhoon, an inundation, or an earthquake, each detector 3 may detect the presence of an event that calls for disaster prevention measures by receiving various kinds of warnings, advisories, earthquake early warnings, and the like from the exterior.

### (Second Embodiment)

A reporting system 10 according to the present embodiment is different from the reporting system 10 according to the first embodiment in that a notification unit 13 transmits pieces of report information to second terminals 5 when an acceptance operation of the pieces of report information is detected at a first terminal 4. Components similar to those in the first embodiment are hereinafter denoted by the same reference signs as those in the first embodiment, and the description thereof is accordingly omitted.

That is, in the first embodiment, when the notification unit 13 transmits the pieces of report information to both the first terminal 4 and the second terminals 5, the notification unit 13 transmits the pieces of report information to the second terminals 5 regardless of the reaction of the user X1 to the first terminal 4. In contrast, in the present embodiment, when the notification unit 13 transmits the pieces of report information to both the first terminal 4 and the second terminals 5, the notification unit 13 transmits the pieces of report information to the second terminals 5 in response to the reaction of the user X1 to the first terminal 4.

As used herein the "acceptance operation" is an operation that the first terminal 4 receives from the user X1 or the like in response to report information transmitted to the first terminal 4, and means, in particular, an operation reflecting an intention of accepting the transmission of the pieces of report information (issuance of a report) to the second terminals 5. Specifically, when the first terminal 4 receives a specific operation, the first terminal 4 detects the acceptance operation.

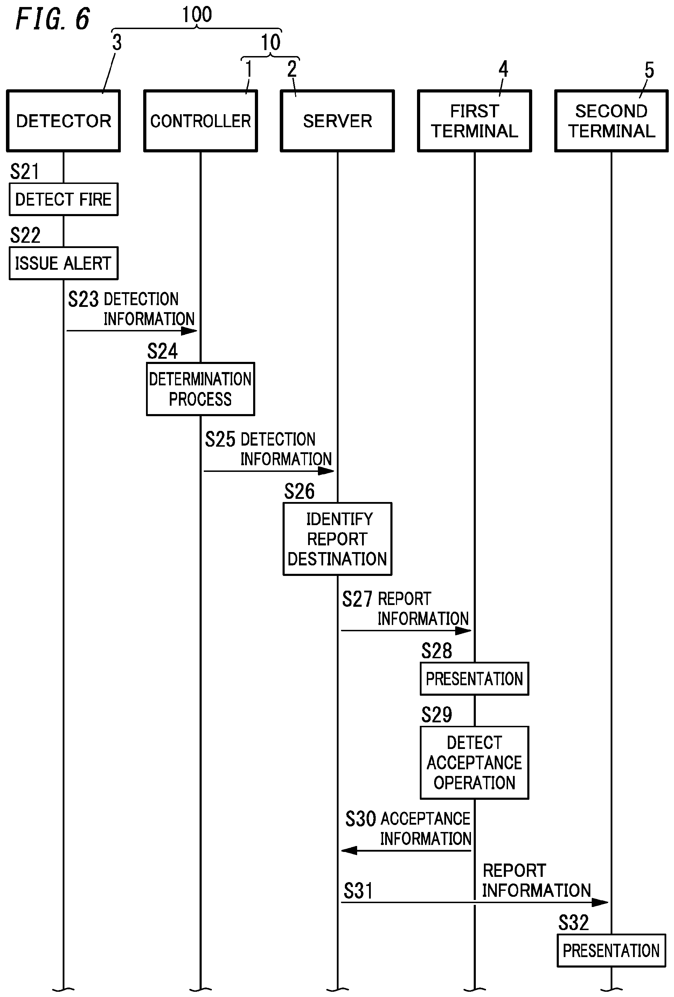

Operation of the reporting system 10 and the disaster prevention system 100 according to the present embodiment will be described below with reference to FIG. 6. Processes S21 to S28 in FIG. 6 respectively correspond to the processes S1 to S8 in FIG. 3 described in the first embodiment, and the description of the processes S21 to S28 is thus omitted in this embodiment.

In sum, in the reporting system 10 according to the present embodiment, the first terminal 4 presents the report information in the process S28 and then performs a standby process of the acceptance operation. Specifically, the first terminal 4 displays, for example, a message saying "Do you want to issue a report to the fire-fighting organization?", an acceptance button labeled with "Yes" and a denial button labeled with "No" in addition to the report information. In this state, if the acceptance button is operated (tapped), the first terminal 4 detects the acceptance operation (S29). In contrast, if a definite time period elapses with the acceptance button not being operated, or if the denial button is operated (tapped), the first terminal 4 determines that the acceptance operation is not given. In this case, the pieces of report information are not transmitted to the second terminals 5.

When the first terminal 4 then detects the acceptance operation (S29), the first terminal 4 transmits acceptance information to a server 2 of the reporting system 10 (S30). The server 2 transmits the pieces of report information to the second terminals 5 only after receiving the acceptance information (S31). When the server 2 transmits the pieces of report information to the second terminals 5 (S31), the second terminals 5 present the pieces of report information thus received (S32).

In a variation of the second embodiment, the first terminal 4 may transfer the report information to the second terminals 5 when the acceptance operation is detected by the first terminal 4. That is, when the acceptance operation is detected by the first terminal 4, the pieces of report information are transmitted from the reporting system 10 (the server 2) to the second terminals 5 without being transmitted via the first terminal 4, but this configuration should not be construed as limiting. Alternatively, the report information may be transmitted from the first terminal 4 to the second terminals 5.

The various configurations (including the variation) described in the second embodiment are adoptable accordingly in combination with the various configurations (including the variations) described in the first embodiment.

### Reference Signs List

- 3: DETECTOR
- 4: FIRST TERMINAL
- 5: SECOND TERMINAL
- 10: REPORTING SYSTEM
- 12: ACQUISITION UNIT
- 13: NOTIFICATION UNIT
- 14: DETERMINATION PROCESSOR
- 24: CHANGING UNIT
- 31: SENSOR
- 100: DISASTER PREVENTION SYSTEM
- F1: FACILITY
- X1: USER
- Y1: FIRE-FIGHTING ORGANIZATION
- Y2: MANAGEMENT COMPANY
- Y3: SECURITY COMPANY
- Y4: AUTONOMOUS COMMUNITY

## Claims

1. A reporting system (10), comprising:
an acquisition unit (12) configured to acquire detection information from a detector (3) being configured to detect presence of an event that calls for disaster prevention measures in a facility (F1); a server (2) installed outside of the facility (F1); and
a notification unit (13) configured to transmit at least one piece of report information to an outside of the facility (F1) based on the detection information,
the notification unit (13) being configured to transmit the at least one piece of report information to at least one of a first terminal (4) or a second terminal (5), the first terminal (4) being owned by a user (X1) being a resident of the facility (F1), the second terminal (5) being a terminal different from the first terminal (4) and owned by a person or organization, wherein the person or organization includes at least one of a subject of managing the facility (F1), a subject of providing security service, an autonomous community to which the facility (F1) belongs, or a firefighting organization,
wherein the reporting system (10) further comprises a storage unit (22) configured to store pieces of information on at least the first terminal (4) and the second terminal (5), the pieces of information on the first terminal (4) and the second terminals (5) being identifiers for identifying the first terminal (4) and the second terminal (5),
a determination processor (14) configured to determine
whether or not to allow the notification unit (13) to transmit the at least one piece of report information, based on determining information relating to a situation of a person present in the facility (F1),
wherein the server (2) is configured such that
if the determination result of the determination processor (14) is that the person is present in the facility (F1), only the first terminal (4) is determined as a report destination of the at least one piece of report information,
if the determination result of the determination processor (14) is that no person is present in the facility (F1), both the first terminal (4) and the second terminal (5) are determined as report destinations of the at least one piece of report information.

2. The reporting system (10) of any one of claims 1, wherein
the notification unit (13) is configured to include location information of the detector (3) which is a generation source of the detection information into a piece of report information, which is to be transmitted to at least the second terminal (5), of the pieces of report information.

3. The reporting system (10) of claim 2, wherein
the location information includes at least one of
information representing a location of the facility (F1) or
information representing an installation location of the detector (3) in the facility (F1).

4. The reporting system (10) of any one of claims 1 to 3, wherein
the notification unit (13) is configured to include time information into a piece of report information of the pieces of report information, which is to be transmitted to at least the second terminal (5), the time information representing a time at which the detection information is generated.

5. The reporting system (10) of any one of claims 1 to 4, further comprising
a changing unit configured to change location information of the detection information transmitted as the at least one piece of report information from the notification unit (13).

6. The reporting system (10) of any one of claims 1 to 5, wherein
the notification unit (13) is configured to, when an acceptance operation to a piece of report information of the at least one piece of report information is detected by the first terminal (4), transmit a piece of report information of the at least one piece of report information to the second terminal (5).

7. The reporting system (10) of any one of claims 1 to 6, wherein
the detector (3) includes a sensor configured to output an electric signal according to a physical quantity.

8. A disaster prevention system, comprising:
the reporting system (10) of any one of claims 1 to 7; and
a detecting terminal adopted as the detector (3).

9. A reporting method executed by one or more processors, the reporting method comprising:
an acquisition process of acquiring detection information from a detector (3), the detector (3) being configured to detect presence of an event that calls for disaster prevention measures in a facility (F1); and
a notification process of transmitting at least one piece of report information to an outside of the facility (F1) based on the detection information,
in the notification process, the at least one piece of report information being transmitted to at least one of a first terminal (4) or a second terminal (5), the first terminal (4) being owned by a user (X1), the second terminal (5) being a terminal different from the first terminal (4) and owned by a person or organization, wherein the person or organization includes at least one of a subject of managing the facility (F1), a subject of providing security service, an autonomous community to which the facility (F1) belongs, or a fire-fighting organization,
wherein the method further comprises
storing pieces of information on at least the first terminal (4) and the second terminal (5), the pieces of information on the first terminal (4) and the second terminals (5) being identifiers for identifying the first terminal (4) and the second terminal (5),
determining whether or not to allow the notification unit (13) to transmit the at least one piece of report information based on determining information relating to a situation of a person present in the facility (F1), and
wherein, if the determination result of the determination processor (14) is that the person is present in the facility (F1), only the first terminal (4) is determined by a server (2) installed outside of the facility (F1), as a report destination of the at least one piece of report information, and
if the determination result of the determination processor (14) is that no person is present in the facility (F1), both the first terminal (4) and the second terminals (5) are determined by the server as report destinations of the at least one piece of report information.

10. A computer program comprising instructions that, when executed by one or more processors, cause the one or more processors to execute the reporting reporting method of claim 9.

## Patentansprüche

1. Meldungssystem (10), aufweisend:
eine Erfassungseinheit (12), die konfiguriert ist, um Erkennungsinformationen von einem Detektor (3) zu erfassen, der konfiguriert ist, um ein Vorhandensein eines Ereignisses, das Katastrophenpräventionsmaßnahmen in einer Einrichtung (F1) erfordert, zu erkennen; einen Server (2), der außerhalb der Einrichtung (F1) installiert ist; und
eine Benachrichtigungseinheit (13), die konfiguriert ist, um mindestens eine Meldungsinformation auf der Grundlage der Erkennungsinformationen an eine Stelle außerhalb der Einrichtung (F1) zu übertragen,
wobei die Benachrichtigungseinheit (13) konfiguriert ist, um die mindestens eine Meldungsinformation an mindestens eine von einer ersten Endvorrichtung (4) oder einer zweiten Endvorrichtung (5) zu übertragen, wobei die erste Endvorrichtung (4) einem Benutzer (X1), der ein Bewohner der Einrichtung (F1) ist, gehört, wobei die zweite Endvorrichtung (5) eine Endvorrichtung ist, die sich von der ersten Endvorrichtung (4) unterscheidet und einer Person oder Organisation gehört, wobei die Person oder Organisation mindestens eines von einem Verantwortlichen für die Verwaltung der Einrichtung (F1), einem Verantwortlichen zum Vorsehen von Sicherheitsdiensten, einer autonomen Gemeinschaft, zu der die Einrichtung (F1) gehört, oder einer Feuerwehrorganisation umfasst,
wobei das Meldungssystem (10) ferner eine Speichereinheit (22) aufweist, die konfiguriert ist, um Teile von Informationen über mindestens die erste Endvorrichtung (4) und die zweite Endvorrichtung (5) zu speichern, wobei die Teile von Informationen über die erste Endvorrichtung (4) und die zweite Endvorrichtung (5) Identifikatoren zum Identifizieren der ersten Endvorrichtung (4) und der zweiten Endvorrichtung (5) sind,
einen Bestimmungsprozessor (14), der konfiguriert ist, um
auf der Grundlage eines Bestimmens von Informationen bezüglich einer Situation der Anwesenheit einer Person in der Einrichtung (F1), zu bestimmen, ob der Benachrichtigungseinheit (13) zu erlauben ist, die mindestens eine Meldungsinformation zu übertragen oder nicht,
wobei der Server (2) so konfiguriert ist, dass
wenn das Bestimmungsergebnis des Bestimmungsprozessors (14) ist, dass die Person in der Einrichtung (F1) anwesend ist, nur die erste Endvorrichtung (4) als Meldungsziel der mindestens einen Meldungsinformation bestimmt wird,
wenn das Bestimmungsergebnis des Bestimmungsprozessors (14) ist, dass keine Person in der Einrichtung (F1) anwesend ist, sowohl die erste Endvorrichtung (4) als auch die zweite Endvorrichtung (5) als Meldungsziele der mindestens einen Meldungsinformation bestimmt werden.

2. Meldungssystem (10) nach Anspruch 1, wobei
die Benachrichtigungseinheit (13) konfiguriert ist, um Standortinformationen des Detektors (3), der eine Erzeugungsquelle der Erkennungsinformationen ist, in eine Meldungsinformation einzubeziehen, die an mindestens die zweite Endvorrichtung (5) der Meldungsinformationen zu übertragen ist.

3. Meldungssystem (10) nach Anspruch 2, wobei
die Standortinformationen mindestens eines von Folgendem aufweisen:
Informationen, die einen Standort der Einrichtung (F1) darstellen, oder
Informationen, die einen Installationsort des Detektors (3) in der Einrichtung (F1) darstellen.

4. Meldungssystem (10) nach einem der Ansprüche 1 bis 3, wobei
die Benachrichtigungseinheit (13) konfiguriert ist, um Zeitinformationen in eine Meldungsinformation der Meldungsinformationen einzubeziehen, die an mindestens die zweite Endvorrichtung (5) zu übertragen ist, wobei die Zeitinformationen einen Zeitpunkt darstellen, zu dem die Erkennungsinformationen erzeugt werden.

5. Meldungssystem (10) nach einem der Ansprüche 1 bis 4, ferner aufweisend:
eine Änderungseinheit, die konfiguriert ist, um Standortinformationen der Erkennungsinformationen, die als die mindestens eine Meldungsinformation von der Benachrichtigungseinheit (13) übertragen werden, zu ändern.

6. Meldungssystem (10) nach einem der Ansprüche 1 bis 5, wobei
die Benachrichtigungseinheit (13) konfiguriert ist, um, wenn eine Akzeptanzoperation für einen Teil der Meldungsinformationen der mindestens einen Meldungsinformation durch die erste Endvorrichtung (4) erkannt wird, eine Meldungsinformation der mindestens einen Meldungsinformation an die zweite Endvorrichtung (5) zu übertragen.

7. Meldungssystem (10) nach einem der Ansprüche 1 bis 6, wobei
der Detektor (3) einen Sensor aufweist, der konfiguriert ist, um ein elektrisches Signal entsprechend einer physikalischen Größe auszugeben.

8. Katastrophenpräventionssystem, aufweisend:
das Meldungssystem (10) nach einem der Ansprüche 1 bis 7; und eine als Detektor (3) eingesetzte Erkennungsendvorrichtung.

9. Meldungsverfahren, das von einem oder mehreren Prozessoren ausgeführt wird, wobei das Meldungsverfahren umfasst:
einen Erfassungsvorgang zum Erfassen von Erkennungsinformationen von einem Detektor (3), wobei der Detektor (3) konfiguriert ist, um das Vorhandensein eines Ereignisses, das Katastrophenpräventionsmaßnahmen in einer Einrichtung (F1) erfordert, zu erkennen; und
einen Benachrichtigungsvorgang zum Übertragen mindestens einer Meldungsinformation an eine Stelle außerhalb der Einrichtung (F1) auf der Grundlage der Erkennungsinformationen,
wobei in dem Benachrichtigungsvorgang die mindestens eine Meldungsinformation an mindestens eine von einer ersten Endvorrichtung (4) oder einer zweiten Endvorrichtung (5) übertragen wird, wobei die erste Endvorrichtung (4) einem Benutzer (X1) gehört, die zweite Endvorrichtung (5) eine Endvorrichtung ist, die sich von der ersten Endvorrichtung (4) unterscheidet und einer Person oder Organisation gehört, wobei die Person oder Organisation mindestens eines von einem Verantwortlichen für die Verwaltung der Einrichtung (F1), einem Verantwortlichen zum Vorsehen von Sicherheitsdiensten, einer autonomen Gemeinschaft, zu der die Einrichtung (F1) gehört, oder einer Feuerwehrorganisation umfasst,
wobei das Verfahren ferner umfasst:
Speichern von Informationen auf mindestens der ersten Endvorrichtung (4) und der zweiten Endvorrichtung (5), wobei die Informationen auf der ersten Endvorrichtung (4) und der zweiten Endvorrichtung (5) Identifikatoren zum Identifizieren der ersten Endvorrichtung (4) und der zweiten Endvorrichtung (5) sind,
Bestimmen, ob der Benachrichtigungseinheit (13) zu erlauben ist, die mindestens eine Meldungsinformation zu übertragen, auf der Grundlage der Bestimmung von Informationen bezüglich einer Situation der Anwesenheit einer Person in der Einrichtung (F1), und
wobei, wenn das Bestimmungsergebnis des Bestimmungsprozessors (14) ist, dass die Person in der Einrichtung (F1) anwesend ist, nur die erste Endvorrichtung (4) von einem Server (2), der außerhalb der Einrichtung (F1) installiert ist, als Meldungsziel der mindestens einen Meldungsinformation bestimmt wird, und
wenn das Bestimmungsergebnis des Bestimmungsprozessors (14) ist, dass keine Person in der Einrichtung (F1) anwesend ist, sowohl die erste Endvorrichtung (4) als auch die zweite Endvorrichtung (5) von dem Server als Meldungsziele der mindestens einen Meldungsinformation bestimmt werden.

10. Computerprogramm, Anweisungen aufweisend, die, wenn sie von einem oder mehreren Prozessoren ausgeführt werden, den einen oder die mehreren Prozessoren veranlassen, das Meldungsverfahren nach Anspruch 9 auszuführen.

## Revendications

1. Un système de rapport (10), comprenant :
une unité d'acquisition (12) qui est configurée pour acquérir une information de détection provenant d'un détecteur (3) qui est configuré pour détecter la présence d'un événement qui requiert des mesures de prévention des catastrophes dans une installation (F1) ; un serveur (2) installé à l'extérieur de l'installation (F1) ;
et
une unité de notification (13) qui est configurée pour transmettre au moins une information de rapport à l'extérieur de l'installation (F1) sur la base de l'information de détection,
l'unité de notification (13) étant configurée pour transmettre ladite au moins une information de rapport à au moins l'un d'un premier terminal (4) ou d'un second terminal (5), le premier terminal (4) étant détenu par un utilisateur (X1) qui est un résident de l'installation (F1), le second terminal (5) étant un terminal différent du premier terminal (4) et détenu par une personne ou une organisation, ladite personne ou organisation comprenant au moins l'une d'une entité de gestion de l'installation (F1), une entité de prestation de service de sécurité, une communauté autonome à laquelle l'installation (F1) appartient, ou une organisation de lutte contre l'incendie,
le système de rapport (10) comprenant en outre une unité de stockage (22) qui est configurée pour stocker des informations sur au moins le premier terminal (4) et le second terminal (5), les informations sur le premier terminal (4) et les seconds terminaux (5) étant des identifiants permettant d'identifier le premier terminal (4) et le second terminal (5),
un processeur de détermination (14) qui est configuré pour déterminer
si l'unité de notification (13) est autorisée ou non à transmettre ladite au moins une information de rapport, sur la base d'une information de détermination relative à une situation d'une personne présente dans l'installation (F1),
le serveur (2) étant configuré de sorte que
si le résultat de la détermination du processeur de détermination (14) est que la personne est présente dans l'installation (F1), seul le premier terminal (4) est déterminé comme destination de rapport de ladite au moins une information de rapport,
si le résultat de la détermination du processeur de détermination (14) est qu'aucune personne n'est présente dans l'installation (F1), le premier terminal (4) et le second terminal (5) sont tous deux déterminés comme destinations de rapport de ladite au moins une information de rapport.

2. Le système de rapport (10) selon la revendication 1, dans lequel
l'unité de notification (13) est configurée pour inclure une information de localisation du détecteur (3) qui est une source de génération de l'information de détection dans une information de rapport, qui doit être transmise au moins au second terminal (5), parmi les informations de rapport.

3. Le système de rapport (10) selon la revendication 2, dans lequel
l'information de localisation comprend au moins l'une
une information représentant un emplacement de l'installation (F1) ou
une information représentant un emplacement d'installation du détecteur (3) dans l'installation (F1).

4. Le système de rapport (10) selon l'une quelconque des revendications 1 à 3, dans lequel
l'unité de notification (13) est configurée pour inclure une information temporelle dans une information de rapport parmi les informations de rapport, qui doit être transmise au moins au second terminal (5), ladite information temporelle représentant un moment auquel l'information de détection est générée.

5. Le système de rapport (10) selon l'une quelconque des revendications 1 à 4, comprenant en outre
une unité de changement qui est configurée pour changer une information de localisation de l'information de détection transmise comme ladite au moins une information de rapport depuis l'unité de notification (13).

6. Le système de rapport (10) selon l'une quelconque des revendications 1 à 5, dans lequel
l'unité de notification (13) est configurée pour, lorsqu'une opération d'acceptation sur une information de rapport parmi ladite au moins une information de rapport est détectée par le premier terminal (4), transmettre une information de rapport parmi ladite au moins une information de rapport au second terminal (5).

7. Le système de rapport (10) selon l'une quelconque des revendications 1 à 6, dans lequel
le détecteur (3) comprend un capteur qui est configuré pour délivrer un signal électrique en fonction d'une grandeur physique.

8. Un système de prévention des catastrophes, comprenant :
le système de rapport (10) selon l'une quelconque des revendications 1 à 7 ; et
un terminal de détection adopté comme détecteur (3).

9. Un procédé de rapport exécuté par un ou plusieurs processeurs, le procédé de rapport comprenant :
un processus d'acquisition consistant à acquérir une information de détection provenant d'un détecteur (3), le détecteur (3) étant configuré pour détecter la présence d'un événement qui requiert des mesures de prévention des catastrophes dans une installation (F1) ; et
un processus de notification consistant à transmettre au moins une information de rapport à l'extérieur de l'installation (F1) sur la base de l'information de détection,
dans le processus de notification, ladite au moins une information de rapport étant transmise à au moins l'un d'un premier terminal (4) ou d'un second terminal (5), le premier terminal (4) étant détenu par un utilisateur (X1), le second terminal (5) étant un terminal différent du premier terminal (4) et détenu par une personne ou une organisation, ladite personne ou organisation comprenant au moins l'une d'une entité de gestion de l'installation (F1), une entité de prestation de service de sécurité, une communauté autonome à laquelle l'installation (F1) appartient, ou une organisation de lutte contre l'incendie,
le procédé comprenant en outre
le stockage d'informations sur au moins le premier terminal (4) et le second terminal (5), les informations sur le premier terminal (4) et les seconds terminaux (5) étant des identifiants permettant d'identifier le premier terminal (4) et le second terminal (5),
la détermination de l'autorisation ou non pour l'unité de notification (13) de transmettre ladite au moins une information de rapport sur la base d'une information de détermination relative à une situation d'une personne présente dans l'installation (F1), et
dans lequel, si le résultat de la détermination du processeur de détermination (14) est que la personne est présente dans l'installation (F1), seul le premier terminal (4) est déterminé par un serveur (2) installé à l'extérieur de l'installation (F1), comme destination de rapport de ladite au moins une information de rapport, et
si le résultat de la détermination du processeur de détermination (14) est qu'aucune personne n'est présente dans l'installation (F1), le premier terminal (4) et les seconds terminaux (5) sont tous deux déterminés par le serveur comme destinations de rapport de ladite au moins une information de rapport.

10. Un programme informatique comprenant des instructions qui, lorsqu'elles sont exécutées par un ou plusieurs processeurs, amènent le ou les processeurs à exécuter le procédé de rapport selon la revendication 9.
